(19)

Europäisches Patentamt
European Patent Office
Office européen des brevets

(11) **EP 1 925 928 A1**

(12) **EUROPEAN PATENT APPLICATION**

(43) Date of publication:
**28.05.2008 Bulletin 2008/22**

(51) Int Cl.:
*G01N 21/17* (2006.01)　　　*G01B 9/02* (2006.01)

(21) Application number: **07018844.6**

(22) Date of filing: **25.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **24.11.2006 JP 2006316893**

(71) Applicant: **KABUSHIKI KAISHA KOBE SEIKO SHO**
**Kobe-shi,**
**Hyogo 651-8585 (JP)**

(72) Inventors:
• **Takahashi, Eiji**
**Nishi-ku,**
**Kobe-shi,**
**Hyogo 651-2271 (JP)**

• **Katayama, Ryo**
**Nishi-ku,**
**Kobe-shi,**
**Hyogo 651-2271 (JP)**
• **Takamatsu**
**Nishi-ku,**
**Kobe-shi,**
**Hyogo 651-2271 (JP)**

(74) Representative: **Müller-Boré & Partner**
**Patentanwälte**
**Grafinger Strasse 2**
**81671 München (DE)**

(54) **Photothermal conversion measuring instrument**

(57)　　There is provided a photothermal conversion measuring instrument (X1) which can measure change in property caused by thermal effect in a sample (5) with high sensitivity and high accuracy by a simple structure. The instrument (X1) includes a current control circuit (3) for sequentially switching output light of a plurality of excitation light sources (1a,1b) each outputting excitation light (B3a,B3b) having a different wavelength band so that one of the output light (B3a,B3b) is irradiated to the sample (5), a light detector (20) for interfering measurement light (B1) transmitted through the sample (5) with reference light (B2) and detecting the intensity of the interference light, and a signal processor (21) for extracting the same cycle components as the switching cycle of the output light switched by the current control circuit (3) from a signal of the interference light intensity obtained from the light detector (20) and for obtaining a difference of signal values corresponding to each of the excitation light based on the extracted signals.

FIG. 1

EP 1 925 928 A1

**Description**

BACKGROUND OF THE INVENTION

1. Field of the Invention

The present invention relates to a photothermal conversion measuring instrument used when analyzing a substance or the like contained in a sample and for measuring the change in property based on the change in refractive index generated in the sample by photothermal effect when excitation light is irradiated to the sample.

2. Description of the Related Art

Improvement of analysis sensitivity is important for providing reducing of the amount of a test regent, simplification of a condensation process of a sample, efficiency of analyzing, reducing cost in the analyzing of the substance and the like contained in various samples. On the other hand, when excitation light is irradiated to a sample, the irradiated portion generates heat by absorbing the excitation light. This phenomenon is called photothermal effect. Further, the measurement of the heat value generated by the photothermal effect is called photothermal conversion measurement.

Heretofore, as a highly sensitive analyzing method of a sample using the photothermal conversion measurement, a technique for using thermal lens effect formed in a sample by photothermal effect (hereinafter, referred to as thermal lens method) has been known.

An analysis device using the thermal lens method (photothermal conversion dispersion analysis device) is shown in, for example, Japanese Unexamined Patent Application Publication No. 10-232210 (hereinafter, referred to as "Patent Document 1"). In the analysis device using the thermal lens method, detection light (measurement light) irradiated to a sample is condensed and is passed through a pin hole, and the light intensity of the detection light after passed through the pin hole is detected. Herewith, the change in refractive index caused by heat generation of the sample to which excitation light is irradiated is detected as the change of the condensing state of the detection light.

On the other hand, a technique has been disclosed in Japanese Unexamined Patent Application Publication No. 2004-301520 (hereinafter, referred to as "Patent Document 2") by which the change of refractive index caused by photothermal effect of a sample is treated as the change in phase of the measurement light passed through (transmitted through) the sample, and the change of the reflective index is measured by using light interference method.

Herewith, the change in refractive index of a sample can be stably measured with optically high accuracy and high sensitivity independent of the position of a light detector (photoelectric conversion means), intensity of the measurement light, intensity distribution thereof, and the like even when, for example, the position of the light detector (photoelectric conversion means), intensity of the measurement light, intensity distribution thereof, and the like are different for every device as far as they are not changed during measurement.

Further, a method has been disclosed in Patent Document 1 and Patent Document 2 by which S/N ratio is improved by using excitation light whose intensity is cyclically modulated and by measuring measurement light (detection light) for the same cycle component as the intensity modulation cycle of the excitation light.

However, in the measurement using the thermal lens method shown in Patent Document 1, it is required to increase the intensity of the excitation light or to reduce the diameter of the pin hole through which the measurement light after the measurement light is passed through the sample is passed in order to enhance measurement sensitivity. However, there are problems in that the increase of the intensity of the excitation light invites increase of power consumption and high cost, and the reduction of the diameter of the pin hole invites deterioration of the S/N ratio and elongation of the measurement time due to decrease of the light quantity received by a detector.

Further, there is a problem in that when a substance (hereinafter, referred to as disturbing substance) whose refractive index is changed by application of heat by excitation light such as a cell for storing a sample, a solvent stored in the cell with a sample is presence in light path of the excitation light, the disturbing substance deteriorates the S/N ratio in both Patent Document 1 and Patent Document 2.

SUMMARY OF THE INVENTION

Accordingly, it is an object of the present invention to provide a photothermal conversion measuring instrument which makes it possible to measure the change in property caused by photothermal effect in a sample with high sensitivity and high accuracy (low noise) by a simple structure.

In order to attain the above object, according to an aspect of the present invention, there is provided a photothermal conversion measuring instrument used for emitting excitation light to a predetermined sample and for measuring change in property generated by photothermal effect of the sample based on measurement light irradiated to and transmitted through the sample includes: (1) a plurality of excitation light sources for outputting the excitation light each having a different wavelength band; (2) irradiation light switching means for sequentially switching output light of the plurality of excitation light sources at a predetermined cycle so that one of the output light is irradiated to the sample; (3) measurement light detecting means for detecting the measurement light transmitted through a portion of the sample irradiated by the excitation light; (4) same cycle component extraction means for extracting the same cycle component as the switching cycle of each of the output light of the plurality of excitation light sources switched by the irradiation light switching means from a signal detected by the measurement light detecting means; and (5) signal difference deriving means for executing a process for obtaining a difference of signal values corresponding to each of the output light of the plurality of the excitation light sources extracted by the same cycle component extraction means.

Herein, the wavelength band (dispersion intensity distribution) of the excitation light irradiated to the sample is periodically switched by the irradiation light switching means.

Further, the difference of the signal values obtained by the signal difference deriving means (variation of the signal values obtained by the same cycle component extraction means) becomes a signal for expressing the change in property generated by photothermal effect of the sample.

Note that the irradiation light switching means is an example of means for sequentially switching the excitation light each having a different wavelength band at a predetermined cycle and emitting the sample.

In the photothermal conversion measuring instrument having the structure described above, when the plurality of excitation light having a different wavelength band is irradiated by the irradiation light emitting means, each of the irradiation state is approximately set so that a difference is not generated in the amount of the light absorbed by the disturbing substance except a substance to be a measurement object (hereinafter, referred to as measurement object substance).

For example, when the sample is a liquid sample in which a predetermined measurement object substance is dissolved in a solvent, the intensity of each of the output light of the plurality of light sources shall be preliminarily set so that the difference of each of the signal value corresponding to each of the output light of the plurality of the excitation light sources extracted by the same cycle component extraction means falls in a predetermined acceptable range when only the solvent is measured as the sample by the photothermal conversion measuring instrument. Alternatively, optical filters for attenuating the output light may be provided for a part or all of the output light of the plurality of light sources so that the difference of the each of the signal value falls in a predetermined acceptable range.

Alternatively, the photothermal conversion measuring instrument according to the invention may further include (6) light source output light intensity automatically setting means for automatically setting the intensity of each of the output light of the plurality of light sources so that the difference of each of the signal value corresponding to each of the output light of the plurality of light sources extracted by the same cycle component extraction means falls in a predetermined acceptable range.

Consequently, the signal obtained by the same cycle component extraction means is changed in accordance with the change of wavelength band of the excitation light (switching of excitation light) irradiated to the sample. The change of the signal is basically caused only by the change of photothermal effect of the measurement object substance generated by the difference of the wavelength band of the excitation light (dispersion intensity distribution). Accordingly, measurement sensitivity (detection sensitivity) of a signal processing system can be enhanced (for example, amplification gain can be enhanced) with little regard for saturation of dynamic range (measurement range) of an excitation light measurement signal caused by the change in temperature of the disturbing substance. As a result, the deterioration of the S/N ratio caused by the change in temperature (change in refractive index) of the disturbing substance can be prevented when detecting the measurement light.

Incidentally, a specific example of the irradiation light switching means will be described below.

For example, the irradiation light switching means switches the output light of the plurality of light sources so that one of the output light is irradiated to the sample by switching supply and stop of electric power with respect to each of the plurality of light sources. Alternatively, the irradiation light switching means may switch each of the output light of the plurality of light sources so that each of the output light is blocked or not in the light path thereof at a predetermined cycle.

Further, it is more preferable that the measurement light detecting means is equipped with light interference means for interfering the measurement light transmitted through the sample with reference light and detecting the intensity of the interference light as shown in Patent Document 2.

As described above, by treating the change in refractive index caused by photothermal effect of a sample as the change in phase of the measurement light and by detecting the change in refractive index by light interferometry (relative optical methodology), the sample can be repeatedly (stably) analyzed with optically high accuracy and high sensitivity independent of the position of a light detector (photoelectric conversion means), intensity of the measurement light, intensity distribution thereof, and the like even when, for example, the position of the light detector (photoelectric conversion means), intensity of the measurement light, intensity distribution thereof, and the like are different for every device as far as they are not changed during measurement.

Further, it is preferable that the measurement light detecting means is equipped with back surface side light reflecting means provided at the opposite surface side of a surface of the sample irradiated by the measurement light and front surface side light reflecting means provided at a surface side of the sample irradiated by the excitation light, and the measurement light detecting means detects the measurement light after the measurement light is multiply reflected between the back surface side light reflecting means and the front surface side light reflecting means and is transmitted through the sample.

Herewith, only a slight change in refractive index of the sample results in a large change of the state of the measurement signal. As a result, the change in property (change in refractive index) generated by photothermal effect of the sample can be measured with high accuracy and high sensitivity. In addition, such a highly sensitive measurement can be provided by a very simple structure.

Further, it is preferable that the output light of the plurality of the excitation light sources and the measurement light is beam light, and light axes of the output light of the plurality of excitation light sources and a light axis of the measurement light in the sample are set to the same axis or approximately the same axis.

Herewith, the light path of the measurement light in the sample can be efficiently excited.

The photothermal conversion measuring device according to the invention cyclically switches the type (wavelength band) of the excitation light emitted to the sample and extracts the detected signal of the measurement light synchronized with the switching cycle. Accordingly, the change of the detected signal caused by the change of temperature of the disturbing substance by the excitation light is removed by preliminarily appropriately setting the wavelength bands and the intensities of the plurality of excitation light. As a result, the deterioration of the S/N ratio caused by the change of temperature (change in refractive index) of the disturbing substance can be prevented and the change in property due to photothermal effect of the measurement object substance can be measured with high sensitivity and high accuracy (low noise) by a simple structure.

Further, when the detection of the measurement light is performed based on optical interferometry for detecting the intensity of the interference light in which the measurement light transmitted through the sample and predetermined reference light are interfered with each other, the measurement light is detected by a relative optical method. This enables to stably analyze a sample with high accuracy and high sensitivity.

Further, by detecting the measurement light after the measurement light is multiply reflected between the both sides of a sample and is transmitted through the sample for plural times, only a slight change in refractive index of the sample result in a large change of the state of the measurement light. As a result, the change in property (change in refractive index) generated by photothermal effect of the sample can be measured with high accuracy and high sensitivity. In addition; such a highly sensitive measurement can be provided by a very simple structure.

BRIEF DESCRIPTION OF THE DRAWINGS

Fig. 1 is a schematic block diagram of a photothermal conversion measuring instrument according to a first embodiment of the invention;

Fig. 2 is a diagram schematically showing dispersion intensity distribution of the output light of two excitation light sources equipped in the photothermal conversion measuring instrument;

Fig. 3 is a diagram schematically showing absorbance property of a measurement object substance and a solvent thereof of the photothermal conversion measuring instrument; and

Fig. 4 is a block diagram schematically showing a part of a photothermal conversion measuring instrument according to a second embodiment of the invention.

DESCRIPTION OF THE PREFERRED EMBODIMENTS

Hereinafter, embodiments of the invention will be described with reference to the accompanying drawings for understanding of the invention. Note that the embodiments described below are embodied examples of the invention and the technical scope of the invention is not limited to the embodiments.

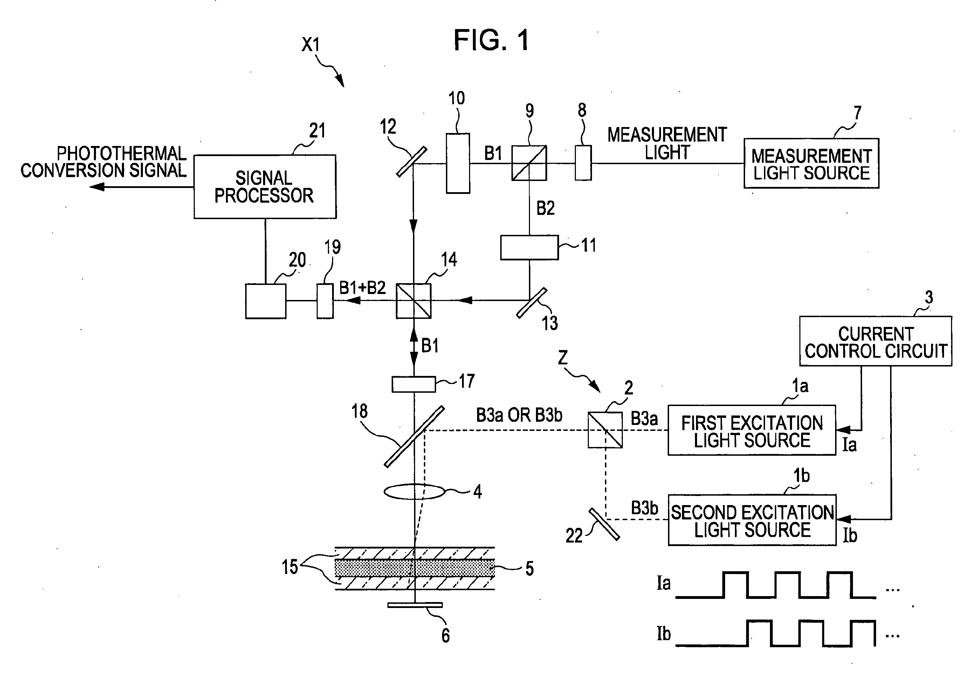

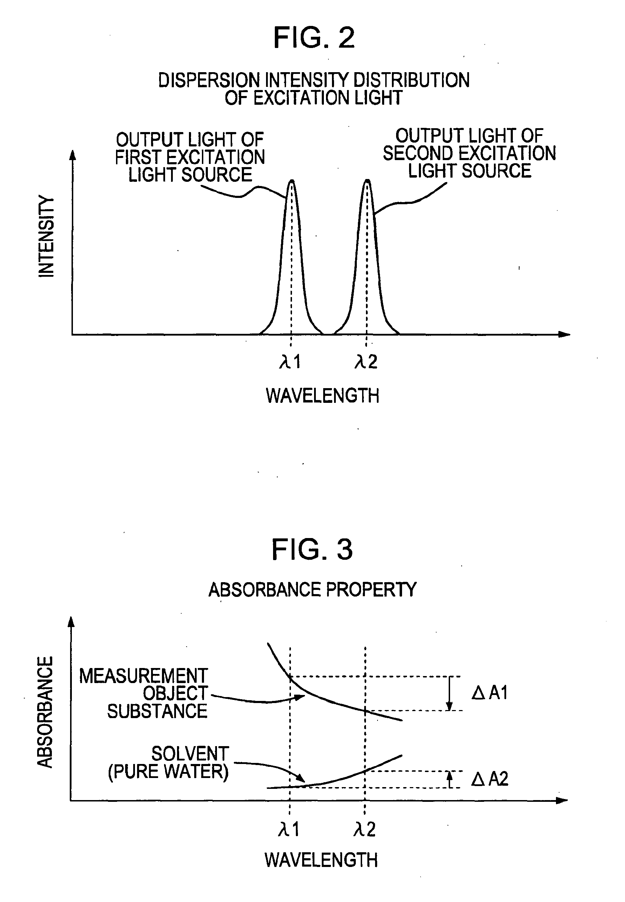

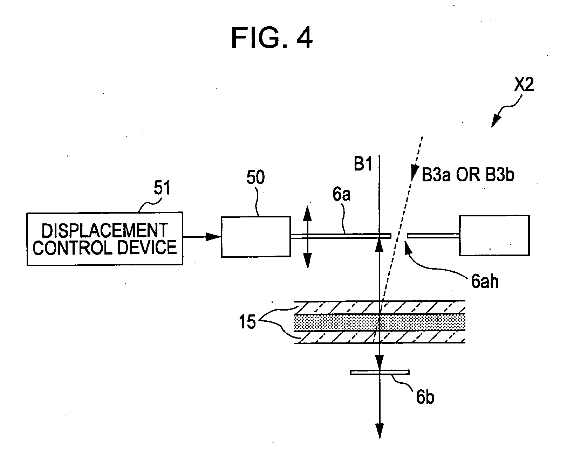

Herein, Fig. 1 is a block diagram schematically showing a photothermal conversion measuring instrument X1 according to a first embodiment of the invention, Fig. 2 is a diagram schematically showing dispersion intensity distribution of the output light of two excitation light sources equipped in the photothermal conversion measuring instrument X1, Fig. 3 is a diagram schematically showing absorbance property of a measurement object substance and a solvent thereof measured by the photothermal conversion measuring instrument X1, and Fig. 4 is a block diagram schematically showing a part of a photothermal conversion measuring instrument X2 according to a second embodiment of the invention.

The photothermal conversion measuring instruments X1, X2 according to the embodiments of the invention each is a measuring instrument used for irradiating excitation light to a predetermined sample and measuring change in property generated by photothermal effect of the sample based on measurement light also irradiated to the excitation portion of the sample and transmitted therethrough.

First Embodiment

First, the photothermal conversion measuring instrument X1 according to the first embodiment of the invention will be described by using the block diagram schematically shown in Fig. 1.

The photothermal conversion measuring instrument X1 is equipped with a excitation light outputting device Z having two excitation light sources 1a, 1b, a polarizing beam splitter 2 (hereinafter, referred to as PBS 2), a current control circuit 3, and a mirror 22. Hereinafter, one of the two excitation light sources 1a, 1b is referred to as a first excitation light source 1a, and the other one is referred to as a second excitation light source 1b.

The first excitation light source 1a and the second excitation light source 1b are each a leaser light source of a single wavelength for outputting beam light (that is, excitation light) for exciting a sample 5 which is a measurement object and each output beam light whose wavelength is different for each other (an example of the plurality of excitation light sources). The directions of the polarized surfaces of the two beam light are different by 90 degrees. Hereinafter, output light of the first excitation light source 1a is referred to as first excitation light B3a, and output light of the second excitation light source 1b is referred to as second excitation light B3b.

The first excitation light B3a output from the first excitation light source 1a is irradiated to the sample 5 after passed though the PBS 2. Further, the second excitation light B3b output from the second excitation light source 1b is irradiated to the sample 5 after reflected (deflected) by the mirror 22 and further reflected (deflected) by the PBS 2. In the example shown in Fig. 1, optical path of each of the first excitation light B3a and second excitation light B3b are the same (same axis) in the section from the PBS 2 to the sample 5.

Then, the excitation light outputting device Z is a device for sequentially switching the two types of excitation light B3a, B3b each having a different wavelength band at a predetermined cycle and irradiating the sample 5.

Specifically, the current control circuit 3 (an example of the irradiation light switching means) switches the supply and the stop of the electric power (current) with respect to each of the two excitation light sources 1a, 1b at a predetermined cycle. At this time, the, the current control circuit 3 switches ON/OFF of the current supply to the first excitation light source 1a and ON/OFF of the current supply to the second excitation light source 1b in opposite phase for each other (so as to be shifted by a half cycle). Herewith, output light of the two excitation light sources 1a, 1b (first excitation light B3a, second excitation light B3b) are switched so that one of the output light is irradiated to the sample 5. That is, by the operation of the excitation light outputting device Z, the excitation light irradiated to the sample 5 is cyclically switched in the wavelength band (dispersion intensity distribution). For example, the current control circuit 3 switches the supply and the stop of current with respect to the two excitation light sources 1a, 1b at a cycle of about 100 Hz to 10 kHz.

Note that, the current control circuit 3 can freely adjust the level of the electric power (current) to be supplied to each of the two excitation light sources 1a, 1b in accordance with setting values from a signal processor 21 described below. By the adjustment of the electric power (current), the intensity of each of the first excitation light B3a and the second excitation light B3b can be adjusted.

In addition, the photothermal conversion measuring instrument X1 is also quipped with a measurement light source 7, various optical equipments, a light detector 20, the signal processor 21, and the like. Herein, the signal processor 21 is constituted by, for example, a calculator equipped with an input interface of a light intensity signal and the processor thereof performs various processes described below by implementing a predetermined program preliminarily stored in a memory thereof.

The measurement light source 7 is a laser light source used as both of the light source of measurement light for measuring the change in the refractive index of the sample 5 and the light source of reference light to be interfered therewith.

The polarized surface of laser light output from the measurement light source 7 (for example, He-Ne laser having output of 1 mW) is adjusted by a 1/2 wavelength plate 8, and the polarized laser light is separated into two polarized waves (B1, B2) perpendicular to each other by a polarizing beam splitter (hereinafter, referred to as PBS) 9. After passed through the PBS 9, the polarized light B1 functions as measurement light and the polarized light B2 functions as reference light.

Each of the polarized waves B1 and B2 is shifted in light frequency (converted in frequency) by corresponding one of acoustooptical modulators (AOM) 10, 11, reflected by corresponding one of mirrors 12, 13, and introduced into a PBS 14. The frequency difference $f_b$ of the two perpendicular polarized waves B1, B2 shall be set to, for example, 30MHz or the like.

The polarized light B2 to be reference light is passed through (transmitted through) a PBS 14 and proceeds to a polarization plate 19.

On the other hand, the polarized light B1 to be measurement light is set to be transmitted through the PBS 14, to be passed through a 1/4 wavelength plate 17, a mirror 18, and the lens 4, and to be irradiated to the portion of the sample 5 irradiated by the excitation light B3a, B3b (that is, an excitation portion) from approximately the same direction as the excitation light B3a, B3b. As a result, light axes of the both excitation light B3a, B3b and the light axis of the measurement light B1 in the sample 5 are approximately set to the same axis.

Note that when each of the excitation light B3a, B3b, and the measurement light B1 is irradiated to the sample 5 from a different direction, it is preferable to set the crossing angle of the excitation light B3a, B3b and the measurement light B1 as small as possible in the sample 5. Herewith, the optical path of the measurement light B1 in the sample 5 can be more efficiently excited.

Further, the measurement light B1 introduced into the sample 5 is passed through the sample 5, reflected by a mirror 6 provided at the back surface side of the sample 5 (opposite surface side of the irradiation surface of the measurement light B), passed through the sample 5 again (that is, passed through back and forth), passed through the lens 4, the mirror 18, the 1/4 wavelength plate 17, and returned to the PBS 14.

Herein, the measurement light B1 is rotated in the polarized surface by 90 degrees by passing through the 1/4 wavelength plate 17 back and forth, so that the measurement light B1 is reflected by the PBS 14 at this time and proceeds to the polarizer 19 with the polarized wave B2 (reference light).

In the polarizer 19, the measurement light B1 and the reference light B2 having a light frequency different from that thereof interfere with each other and the light intensity of the interference light B1+B2 is converted into an electric signal (hereinafter, the signal value of the electric signal is referred to as interference light intensity) by the light detector 20 (photoelectric conversion means). The electric signal (that is, interference light intensity) is input and stored in the signal processor 21 and arithmetic processing of the change in phase of the measurement light B1 is performed in the signal processor 21.

As described above, the photothermal conversion measuring instrument X1 is equipped with each equipment for introducing the measurement light B1 irradiated to and transmitted through the sample 5 and the reference light B2 to the direction of the polarizer 19 by the optical system equipments, forming the interference light of the measurement light B1 and the reference light B2 by the polarizer 19, and detecting the measurement light B1 by light interferometry by detecting the interference light intensity by the light detector 20 (an example of measurement light detecting means and light interference means).

Herein, the sample 5 is stored in a cell 15 which is a transparent case formed by quartz glass or the like, and in some cases, stored in the cell 15 as a liquid sample in which a measurement object substance is dissolved in a predetermined solvent. Accordingly, the measurement light B1 and the excitation light B3a, B3b are irradiated to a measurement object substance and are passed through (transmitted through) another substance (cell 15 and a solvent in some case) which becomes disturbance cause in measurement.

Incidentally, in the photothermal conversion measurement, in order to enhance measurement sensitivity, the thickness of the sample 5 is increased in the transmission direction of the measurement light B1 to increase the heating value of the sample 5 caused by photothermal effect, thereby performing the measurement. In this case, in order to provide sufficient excitation along the whole permeability pathway, the sample 5 is required to be irradiated by the excitation light having a large power. At the same time, in the photothermal conversion measuring instrument X1, the light source for outputting excitation light (the excitation light sources 1a, 1b,) is a laser light source which can output the light having a large power. Further, the both light axes of excitation light B3a, B3b are set so as to be approximately the same as the light axis of the measurement light B1, so that the light path of the measurement light B1 in the sample 5 can be effectively exited by reducing the beam diameter of the excitation light. Accordingly, the photothermal conversion measuring instrument X1 enables to enhance the measurement sensitivity by further increasing the thickness of the sample 5.

As described above, in the measurement of the sample 5 using the photothermal conversion measuring instrument X1, the two types of excitation light B3a, B3b respectively having a difference wavelength band (dispersion intensity distribution) are cyclically switched and irradiated to the sample 5 by the excitation light outputting device Z.

Then, the signal processor 21 extract the same cycle components as the switching cycle of each of the output light B3a, B3b of the two excitation light sources 1a, 1b controlled by the current control circuit 3 from the signal of the interference light intensity (an example of detected signal of the measurement light B1) obtained from the light detector 20 (an example of the same cycle component extraction means). Further, the signal processor 21 executes the process for obtaining the difference of the signal values obtained by the extraction process, that is, the signals values corresponding to each of the excitation light B3a, B3b (an example of the signal difference deriving means), and measures the change in property (change in refractive index) occurred by the photothermal effect of the sample 5 based on the difference of the signal values. Hereinafter, the extraction process of the signal in the signal processor 21 is referred to as same cycle component extraction process. The same cycle component extraction process is a lock-in detection process provided by so called a lock-in amp.

Herein, interference light intensity S1 obtained in the signal processor 21 can be expressed by the next formula (1).

$$S1=C1+C2\cdot\cos(2\pi\cdot f_b\cdot t+\phi) \quad\cdots\quad (1)$$

C1, C2 are each a constant number determined by the optical system such as PBS and the transmittance of the sample 5. $\phi$ is a phase difference determined by the difference of light path lengths of the measurement light B1 and the reference light B2, $f_b$ is a frequency difference between the measurement light B1 and the reference light B2. It is recognized that the change of the phase difference $\phi$ is obtained from the change of the interference light intensity S1 (difference between when no excitation light is irradiated or the intensity thereof is small and when the intensity thereof is large). The signal processor 21 calculates the change of the phase difference based on the formula (1).

Incidentally, suppose that the amplitude of the interference light (change in intensity) when irradiating each of the first excitation light B3a and the second excitation light B3b is respectively expressed by Ka, Kb, the phase difference $\phi$ determined by the difference of the light path lengths of the measurement light B1 and the reference light B2 can be expressed by the next formula (2) expressing the overlapping of the change in state by the excitation light B3a and the change in state by the excitation light B3b.

$$\phi=Ka\cdot\sin(\omega t)-Kb\cdot\sin(\omega t) \quad\cdots\quad (2)$$

It is recognized that the difference of the signal values corresponding to each of the two excitation light B3a, B3b (=|Ka-Kb|) expresses the magnitude of the phase difference $\phi$.

Herein, a case of a liquid sample will be described in which a predetermined measurement object substance is dissolved in a solvent.

In this case, the intensities of the two excitation light B3a, B3b which are the output light of the two excitation light sources 1a, 1b are preliminarily set so that the amplitudes Ka, Kb (signal values) of the both signals (the signals corresponding to each of the output light B3a, B3b of the two excitation light sources 1a, 1b) extracted by the same cycle component extraction process of the signal processor 21 becomes approximately the same value (Ka≈Kb) when only the solvent not including a measurement object substance is measured as a sample by the photothermal conversion measuring instrument X1. That is, the intensities of the first excitation light B3a and the second excitation light B3b are preliminarily set so that the endothermic value of the solvent when the first excitation light B3a is irradiated and the endothermic value of the solvent when the second excitation light B3b is irradiated becomes approximately the same. Note that the intensities of the two excitation light B3a, B3b are adjusted by the level of the current supplied to each of the two excitation light sources 1a, 1b by the current control circuit 3. Further, that the amplitudes Ka, Kb of the two excitation light B3a, B3b (signal values) are approximately the same means that the difference of the both amplitudes Ka, Kb (signal values) falls in a predetermined allowable small range. The acceptable range is set in accordance with the desired measurement accuracy.

Herewith, $\phi\approx0$ can be realized. Then, in the state where the liquid sample 5 in which a measurement object substance is dissolved is presence, the relation between Ka and Kb becomes Ka>Kb or Kb<Ka, so that the phase difference signal due to the change of the excitation state of the liquid sample 5 is detected.

Similarly, when the sample 5 is a solid sample, the intensities of the two excitation light B3a, B3b which are the output light of the two excitation light sources 1a, 1b are to be preliminarily set so that the amplitudes Ka, Kb of the both signals (the signals corresponding to each of the two excitation light B3a, B3b) extracted by the same cycle component extraction process of the signal processor 21 becomes approximately the same value (Ka≈Kb) when measured by the photothermal conversion measuring instrument X1 under the state where the solid sample is absence.

As described above, influence of heat generation of disturbing substances (cell 15, solvent, and the like) except a measurement object substance can be removed and S/N ratio is improved by cyclically switching the two types of excitation light B3a, B3b each having a different wavelength band and irradiating the sample 5, extracting the same cycle components as the switching cycle of the excitation light from the measurement signal, and regarding the difference of the signal values (=|Ka-Kb|) obtained by the extraction as the evaluation indication of the sample 5. Further, the influence of the noise having no component of the switching frequency of the excitation light is removed, so that the S/N ratio is improved.

In addition, it is preferable to measure the change of the phase difference $\phi$ for a plurality types of samples whose amount (concentration) of a predetermined contained substance is preliminarily known by using the photothermal conversion measuring instrument X1 and to store the relationship between the measured result and the amount of the contained material in the signal processor 21 as a data table. In this case, the amount of the contained material can be specified by performing supplement process and the like to the measured result of the phase difference $\phi$ for the sample to be a measurement object based on the data table. For example, the specification process of the amount of such a contained material may be performed by the signal processor 21.

As described above, the change in refractive index of the sample 5 caused by the photothermal effect can be measured by measuring the change in phase of the measurement light B1 passed through (transmitted through) the sample 5 caused by irradiation of the excitation light by using optical interferometry, that is by the relative evaluation of the phases between the measurement light B1 and the reference light B2 (phase difference). As a result, the change in refractive index of the sample can be stably measured with optically high accuracy independent of the position of the light detector 20, intensity the measurement light, intensity distribution thereof, and the like even when, for example, the position of the light detector 20, the intensity of the measurement light, and intensity distribution thereof, and the like are are different for every device as far as they are not changed during measurement.

In addition, in the photothermal conversion measuring instrument X1, light interference measurement is performed by interfering the measurement light B1 after passed through the sample 5 back and forth with the reference light B2 by reflecting the measurement light B1 to the back surface side of the mirror 6 (an example of the back surface side light reflecting means), so that the change of phase difference φ can be measured with double sensitivity as compared with the case of one way passage. In addition, this does not involve output increase of the excitation light and deterioration of S/N ratio.

Next, the dispersion intensity distribution of the excitation light B3a, B3b in the photothermal conversion measuring instrument X1 and absorbance property of a measuring object substance and a solvent thereof will be described.

As shown in Fig. 2, the two excitation light B3a, B3b have each a different wavelength band. Hereinafter, the center wavelength (main wavelength) of the first excitation light B3a shall be λ1 and the center wavelength (main wavelength) of the second excitation light B3a shall be λ2.

In addition, as shown in Fig. 3, the absorbance property of a substance becomes different by the wavelength of the excitation light to be irradiated even when the component and concentration of the substance are the same and light path length of the excitation light in the substance (thickness of the substance) is the same. In addition, the change in property of the absorbance with respect to the wavelength of the excitation light is different by the type of the substance.

For example, when the sample 5 is a liquid solution in which a measurement object substance is dissolved in pure water (solvent), as shown in Fig. 3, the change in property of absorbance to the wavelength of the excitation light is different between pure water and the measurement object substance.

As shown in Fig. 3, when the wavelength of the excitation light is within the range of, for example, 780 nm to 800 nm and the range therearound, the absorbance of pure water (solvent) is increased with a gradual inclination as the wavelength of excitation light becomes long. On the other hand, in the example shown in Fig. 3, when the wavelength of the excitation light is within the range of, for example, 780 nm to 800 nm and the range therearound, the absorbance of the measurement object substance is reduced with a relatively sharp inclination as the wavelength of excitation light becomes long. That is, the solvent and the measurement object substance included in the sample 5 have inverse property (inverse direction in change) as for the change in absorbance property with respect to the change in the wavelength of the excitation light. As for the measurement object substance having such a property, there are included, for example, iron complex, calcium complex, zinc complex, copper complex, and the like.

Note that, in Fig. 3, the differences of the absorbance when the wavelength of the excitation light is 780 nm with respect to the absorbance when the wavelength of the excitation light is 800 nm of the measurement object substance and the solvent (pure water) are respectively expressed by ΔA1 and ΔA2.

When the measurement is performed by the photothermal conversion measuring instrument X1 only for the solvent (pure water) having the property shown in Fig. 3, the intensity of the second excitation light B3b (center wavelength λ2) is required to be set slightly smaller than the intensity of the first excitation light B3a (center wavelength λ1) in accordance with the difference of absorbance ΔA2 in order to set the amplitude Ka of the interference light corresponding to the first excitation light B3a (signal value detected by the light detector 20) and the amplitude Kb of the interference light corresponding to the second excitation light B3b to the approximately same value. Herewith, suppose that the measurement is performed by the photothermal conversion measuring instrument X1 only for the measurement object substance, the difference of the amplitude Ka of the interference light corresponding to the first excitation light B3a (signal value detected by the light detector 20) and the amplitude Kb of the interference light corresponding to the second excitation light B3b becomes further larger than the amount corresponding the difference ΔA1 of the absorbance of the measurement object substance.

As described above, when the solvent and the measurement object substance included in the sample 5 have inverse property for the change in the absorbance property respect to the change in wavelength of the excitation light, ' the level of the measurement value obtained by the photothermal conversion measuring instrument X1 becomes high and the difference of the measurement value according to the properties (component and concentration) of the measurement object substance becomes large. Accordingly, the measurement provides a strong noise resistance and the measurement can be performed with high sensitivity.

The existence of the cell 15 (case of the sample) is ignored for simplicity in the above description. Note that when the influence of the cell 15 is considered, "solvent" in the above description may be substituted by "combination of solvent and the case of the sample"

In the embodiment described above, the example is shown in which the two types of the excitation light B3a, B3b are switched so that one of the excitation light B3a, B3b is irradiated to the sample 5 by switching the supply and the stop of electric power to each of the two excitation light sources 1a, 1b at a predetermined cycle by the current control circuit 3. However, another embodiment may be employed.

For example, the output light B3a, B3b may be switched at a predetermined cycle in order to block or not in the light path thereof by a liquid crystal type shutter, a rotator, or the like disposed in the light path of the output light B3a, B3b of each of the two excitation light sources 1a, 1b.

Further, in the above embodiment, the number of the excitation light source is two. However, the same operation and effect can be obtained even when the photothermal conversion measuring instrument X1 is equipped with not less than three excitation light sources.

Further, the signal processor 21 may have a light source output automatically setting function for automatically setting the intensity of the output light of each of the two excitation light sources 1a, 1b so that the difference |Ka-Kb| of each of the amplitudes Ka, Kb (signal values corresponding to each of the output light B3a, B3b of the two excitation light sources 1a, 1b) which are the signal values extracted by the same cycle component extraction process falls in a predetermined acceptable range (an example of the light source output light intensity automatically setting means). Specifically, the signal processor 21 automatically sets the intensity of the output light of each of the two excitation light sources 1a, 1b by adjusting (performing feedback control) the level of the current supplied to each of the excitation light sources 1a, 1b from the current control circuit 3 in accordance with the difference |Ka-Kb| of the amplitudes Ka, Kb extracted by the same cycle component extraction process.

Note that when the signal processor 21 executes the light source output automatically setting function, only the sample (only solvent) for proof in which the measurement object substance is excepted from the sample 5 which is the primary measurement object is to be the object of the measurement for proof.

Herewith, labor hour for adjusting the intensity of the output light of the excitation light sources 1a, 1b can be omitted.

Next, a photothermal conversion measuring instrument X2 according to the second embodiment of the invention will be described with reference to a schematic diagram shown in Fig. 4. The photothermal conversion measuring instrument X2 is equipped with a structure for further improving the measurement sensitivity than that of the above photothermal conversion measuring instrument X1. Note that only a structure of a portion for multiply reflecting the measurement light B1 by mirrors disposed at both sides of the sample is shown in Fig. 4 for the photothermal conversion measuring instrument X2. However, the photothermal conversion measuring instrument X2 is equipped with the same structure as that of the photothermal conversion measuring instrument X1 except the portion shown in Fig. 4.

As shown in Fig. 4, the photothermal conversion measuring instrument X2 is equipped with high reflection mirrors 6a, 6b (examples of the front surface side light reflecting means and the back surface side light reflecting means) disposed at each of the front surface side (irradiation surface side of the measurement light) and the back surface side of the sample 5. Herewith, the measurement light B1 is multiply reflected between the high reflection mirrors 6a, 6b while passing through the sample 5 back and forth for plural times. Note that the excitation light B3a, B3b are irradiated to the sample 5 through an aperture 6ah provided at a portion of the high reflection mirror 6a.

Further, the photothermal conversion measuring instrument X2 is equipped with a mirror displacement mechanism 50 for adjusting the position (displacement magnitude) of one of the high reflection mirror (the high reflection mirror 6a at the introducing side of the measurement light B1 in Fig. 4) and a displacement control device 51 for controlling the operation of the mirror displacement mechanism 50. As shown in Fig. 4, the mirror displacement mechanism 50 displaces the supporting position of the high reflection mirror 6a in the light axis direction of the measurement light B1.

Then, the distance between the two high reflection mirrors 6a, 6b are finely adjusted by the displacement control device 51 so that the phases of the measurement light which is multiply reflected are synchronized.

Herewith, a part of the measurement light B1 is transmitted through the high reflection mirror 6a at the surface side of the sample 5 and proceeds to the direction of the light detector 20 while the measurement light B1 is multiply reflected between the high reflection mirrors 6a, 6b. Accordingly, the interference light of the reference light B2 and the measurement light B1 in which the light multiply passed through the sample 5 are superimposed is input into the light detector 20. This enables measurement of the phase difference (that is, measurement of the change in refractive index) with more high sensitivity.

As described above, the photothermal conversion measuring instrument X1 is an instrument for switching the output light of the plurality of (two) excitation light sources (the first excitation light source 1a, and the second excitation light source 1b) so that one of the output light is irradiated to the sample 5 by the current control circuit 3.

On the other hand, in the invention, another structure may be employed for providing the means for sequentially switching the excitation light B3a, B3b each having a different wavelength band at a predetermined cycle and irradiating the sample 5.

For example, a photothermal conversion measuring instrument may be employed equipped with each constituent element (a) to (c) described below instead of the two excitation light sources 1a, 1b and the current control circuit 3.

(a) One light source outputting predetermined light. For example, a halogen lamp or the like outputting white light.
(b) A plurality types of optical filters having different filter property (different in wavelength band of the light to be passed through).
(c) a switching mechanism of the optical filters for sequentially switching the plurality of the optical filters at a predetermined cycle to position the filters in the light path from the light source to the sample 5 of the light output from the one light source.

In the photothermal conversion measuring instrument equipped with the constituent elements, the light passed through the plurality of optical filters becomes excitation light each having a different wavelength band (corresponding to the excitation light B3a, B3b). Accordingly, the photothermal conversion measuring instrument equipped the above constituent elements (a) to (c) also can sequentially switch the excitation light B3a, B3b, each having a different wavelength band at a predetermined cycle to irradiate the sample 5. As a result, the same operation and effect as that of the photothermal conversion measuring instrument X1 can be obtained. Such a photothermal conversion measuring instrument has an advantage in that only one light source for excitation light is required. However, as compared with the photothermal conversion measuring instrument X1, a large energy loss is generated because of the presence of the optical filters.
The invention can be applicable to photothermal conversion measurement.

**Claims**

1. A photothermal conversion measuring instrument used for emitting excitation light to a predetermined sample and for measuring change in property generated by photothermal effect of the sample based on measurement light irradiated to and transmitted through the sample: comprising
   a plurality of excitation light sources for outputting the excitation light each having a different wavelength band;
   irradiation light switching means for sequentially switching output light of the plurality of excitation light sources at a predetermined cycle so that one of the output light is irradiated to the sample;
   measurement light detecting means for detecting the measurement light transmitted through a portion of the sample irradiated by the excitation light;
   same cycle component extraction means for extracting the same cycle component as the switching cycle of each of the output light of the plurality of excitation light sources switched by the irradiation light switching means from a signal detected by the measurement light detecting means; and
   signal difference deriving means for executing a process for obtaining a difference of signal values corresponding to each of the output light of the plurality of the excitation light sources extracted by the same cycle component extraction means.

2. The photothermal conversion measuring instrument according to Claim I, wherein the irradiation light switching means switches the output light of the plurality of excitation light sources so that one of the output light is irradiated to the sample by switching supply and stop of electric power with respect to each of the plurality of excitation light sources.

3. The photothermal conversion measuring instrument according to Claim 1 or 2, wherein when the sample is a liquid sample in which a predetermined measurement object substance is dissolved in a solvent,
   the intensity of output light of each of the plurality of excitation light sources is preliminarily set so that the difference of each of the signal value corresponding to each of the output light of the plurality of the excitation light sources extracted by the same cycle component extraction means falls in a predetermined acceptable range when only the solvent is measured as the sample by the photothermal conversion measuring instrument.

4. The photothermal conversion measuring instrument according to Claim 1 or 2, further comprising light source output light intensity automatically setting means for automatically setting the intensity of each of the output light of the plurality of excitation light sources so that the difference of each of the signal value corresponding to each of the output light of the plurality of excitation light sources extracted by the same cycle component extraction means falls in a predetermined acceptable range.

5. The photothermal conversion measuring instrument according to any one of Claims 1 to 4, wherein the measurement light detecting means is equipped with

light interference means for interfering the measurement light transmitted through the sample with reference light and detecting the intensity of the interference light.

6. The photothermal conversion measuring instrument according to any one of Claims 1 to 5, wherein the measurement light detecting means is equipped with
back surface side light reflecting means provided at the opposite surface side of a surface of the sample irradiated by the measurement light and front surface side light reflecting means provided at a surface side of the sample irradiated by the excitation light, and the measurement light detecting means detects the measurement light after the measurement light is multiply reflected between the back surface side light reflecting means and the front surface side light reflecting means and is transmitted through the sample.

7. The photothermal conversion measuring instrument according to any one of Claims 1 to 6, wherein the output light of the plurality of the excitation light sources and the measurement light is beam light, and
light axes of the output light of the plurality of excitation light sources and a light axis of the measurement light in the sample are set to approximately the same axis.

# FIG. 1

PHOTOTHERMAL CONVERSION SIGNAL

SIGNAL PROCESSOR 21

MEASUREMENT LIGHT

MEASUREMENT LIGHT SOURCE 7

B1 9

8

10

12

B2

11

14 B1+B2

20 19

13

Z

CURRENT CONTROL CIRCUIT 3

B1

17

B3a OR B3b

2 B3a

FIRST EXCITATION LIGHT SOURCE 1a

Ia

18

4

22

B3b

SECOND EXCITATION LIGHT SOURCE 1b

Ib

15

5

6

Ia

Ib

X1

EP 1 925 928 A1

# FIG. 2

### DISPERSION INTENSITY DISTRIBUTION OF EXCITATION LIGHT

OUTPUT LIGHT OF FIRST EXCITATION LIGHT SOURCE

OUTPUT LIGHT OF SECOND EXCITATION LIGHT SOURCE

INTENSITY

$\lambda 1$　$\lambda 2$

WAVELENGTH

# FIG. 3

### ABSORBANCE PROPERTY

ABSORBANCE

MEASUREMENT OBJECT SUBSTANCE

SOLVENT (PURE WATER)

$\Delta A1$

$\Delta A2$

$\lambda 1$　$\lambda 2$

WAVELENGTH

# FIG. 4

**European Patent Office**

## EUROPEAN SEARCH REPORT

Application Number

EP 07 01 8844

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | JP 2006 317325 A (KOBE STEEL LTD)<br>24 November 2006 (2006-11-24)<br>* abstract; figure 1 *<br>----- | 1-7 | INV.<br>G01N21/17<br>G01B9/02 |
| X | TRAN C D ET AL: "DUAL-WAVELENGTH PHOTOTHERMAL REFRACTION SPECTROMETRY FOR SMALL-VOLUME SAMPLES"<br>APPLIED SPECTROSCOPY, THE SOCIETY FOR APPLIED SPECTROSCOPY. BALTIMORE, US,<br>vol. 43, no. 6,<br>1 August 1989 (1989-08-01), pages 1056-1061, XP000032928<br>ISSN: 0003-7028<br>* the whole document *<br>----- | 1,2,4 | |
| X | EP 1 691 189 A (KOBE STEEL LTD [JP])<br>16 August 2006 (2006-08-16)<br>* paragraphs [0001], [0054] - [0065], [0075] - [0079], [0085] - [0093], [0098] - [0103], [0112] - [0115]; figures 1,2,18A-18C *<br>----- | 1-3,5-7 | |
| D,X | JP 2004 301520 A (KOBE STEEL LTD)<br>28 October 2004 (2004-10-28)<br>* abstract; figures 1-3 *<br>* paragraphs [0011] - [0017] *<br>----- | 1,2,5-7 | TECHNICAL FIELDS SEARCHED (IPC)<br>G01N<br>G01B |
| A | US 4 310 762 A (HARRIS JOEL M ET AL)<br>12 January 1982 (1982-01-12)<br>* column 3 *<br>----- | 3 | |
| D,A | JP 10 232210 A (BUNSHI BIO PHOTONICS KENKYUSHO) 2 September 1998 (1998-09-02)<br>* abstract *<br>----- | | |

The present search report has been drawn up for all claims

| Place of search | Date of completion of the search | Examiner |
|---|---|---|
| Munich | 11 December 2007 | Duijs, Eric |

EPO FORM 1503 03.82 (P04C01)

## ANNEX TO THE EUROPEAN SEARCH REPORT
## ON EUROPEAN PATENT APPLICATION NO.

EP 07 01 8844

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2007

| Patent document cited in search report | | Publication date | Patent family member(s) | | Publication date |
|---|---|---|---|---|---|
| JP 2006317325 | A | 24-11-2006 | NONE | | |
| EP 1691189 | A | 16-08-2006 | US 2006181708 | A1 | 17-08-2006 |
| JP 2004301520 | A | 28-10-2004 | JP 3949600 | B2 | 25-07-2007 |
| US 4310762 | A | 12-01-1982 | NONE | | |
| JP 10232210 | A | 02-09-1998 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10232210 A

- JP 2004301520 A